# EUROPEAN PATENT APPLICATION

(11) **EP 4 632 916 A1**
(43) Date of publication of application: **15.10.2025**
(21) Application number: 23907843.9
(22) Date of filing: 21.12.2023
(51) Int. Cl.: H01M 50/342, H01M 50/293, H01M 50/242, H01M 10/658, H01M 50/249

(54) **BATTERY MODULE HAVING IMPROVED VENTING STRUCTURE**

(30) Priority: 22.12.2022 KR 20220182327
(71) Applicant: LG Energy Solution, Ltd., Seoul 07335 (KR)
(72) Inventor: KIM, Jae Wook, Daejeon 34122 (KR)
(74) Representative: Plasseraud IP
(86) International application number: PCT/KR2023/021353
(87) International publication number: WO 2024/136560

(57) **Abstract**

The present invention provides a battery module capable of improving venting path and preventing heat propagation, the battery module including: a battery cell laminate comprising a plurality of pouch-type battery cells and a plurality of metal plate stacked in widthwise direction; a U frame having open upper end and open front and rear ends, and accommodating the battery cell laminate; a pair of end plates covering the front and rear ends of the U frame, respectively; and a top plate covering the upper end of the U frame.

## Description

### [TECHNICAL FIELD]

This application claims the benefit of priority based on Korean Patent Application No. 10-2022-0182327 filed on December 22, 2022, entire content disclosed in the document of the patent applications is included as a part of this specification.

The present invention relates to a structure of a battery module including a plurality of pouch-type battery cells with improved thermal runaway delay and venting performance.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used. Since it is desirable for medium to large-sized battery modules to be manufactured in as small a size and weight as possible, rectangular batteries and pouch-type batteries that may be stacked with high integration and have a small weight-to-capacity battery are mainly used as battery cells for medium to large-sized battery modules.

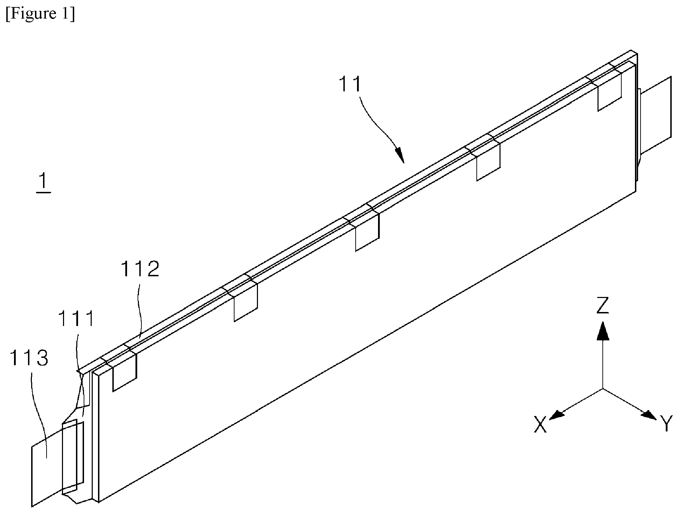

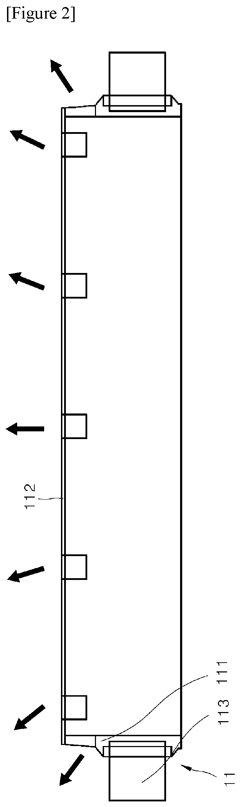

FIGS. 1 and 2 illustrate the structure of a pouch-type battery cell and venting occurring in the battery cell, respectively. Referring to FIGS. 1 and 2, a pouch-type battery cell 11 includes an electrode assembly and a pouch made of metal material and surrounds and seals the electrode assembly. The pouch is sealed at a first sealed portion 111 provided at two lengthwise ends and a second sealed portion 112 provided at one heightwise end by fusing. An electrode lead 113 extends from the electrode assembly and protrudes out of the pouch through the first sealed portion 111.

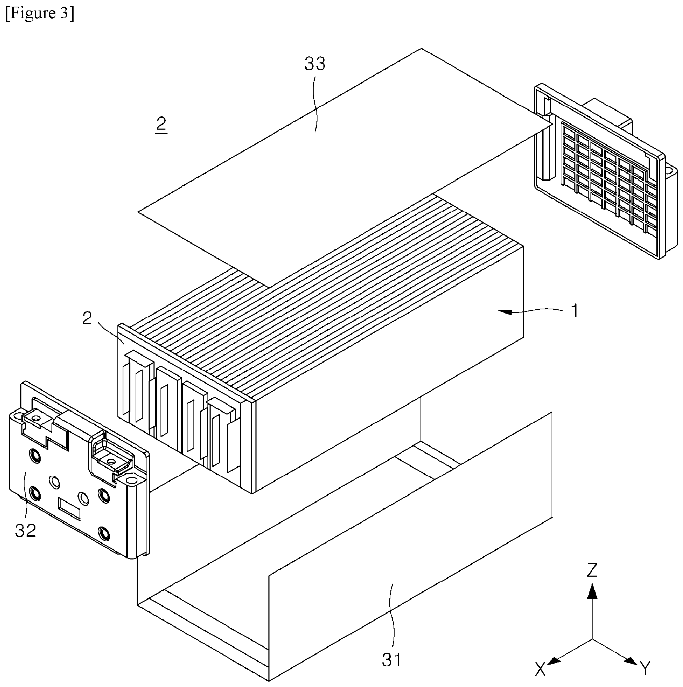

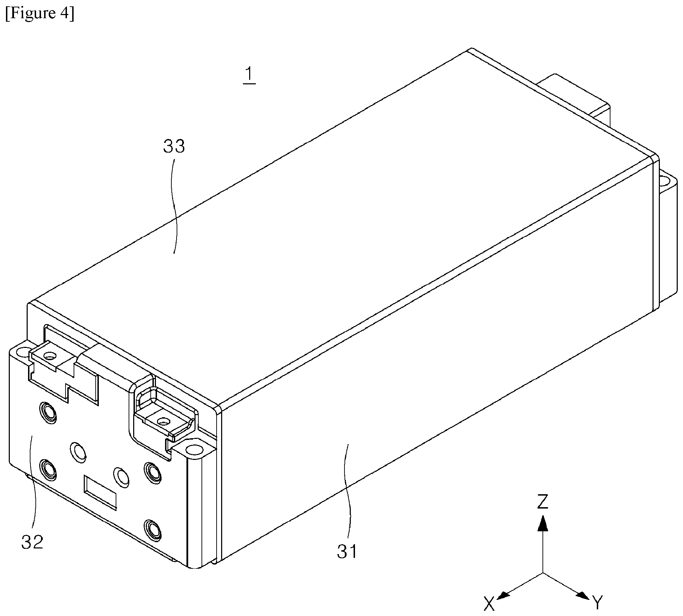

FIGS. 3 and 4 are an exploded perspective view and a perspective view, respectively, illustrating a structure of a general battery module. Referring to FIGS. 3 and 4, the battery module includes a battery cell laminate 1 in which a plurality of battery cells 11 are stacked, a busbar frame 2 connected to two lengthwise ends of the battery cell laminate 1, and a housing 3 accommodating the battery cell laminate 1. The housing 3 includes a U frame 31 having an open upper end and open front and rear ends, a pair of end plates 32 covering the open front and rear ends of the U frame 31, respectively, and a top plate 33 covering the upper end of the U frame. The U frame 31, the end plate 32 and the top plate 33 may be welded and assembled.

The battery cell 11 may ignite due to short circuit, shock, heating, etc. Here, a large amount of gas and heat energy may be discharged from the battery cell 11. When such gas and heat energy spread to other neighboring battery cells within the battery module, thermal runaway, which causes chain ignition between battery cells, may occur. The gas and heat energy may be discharged through two lengthwise ends and one heightwise end of the battery cell 11 where the first sealed portion 111 and the second sealed portion 112 are provided, respectively.

A plurality of the battery modules may be used together to constitute a battery pack. Here, gas and heat energy generated from the battery module may spread to neighboring battery modules. Alternatively, gas and heat energy generated from a neighboring battery module may be propagated to the battery module. In such case, thermal runaway at battery pack level may occur.

### [DETAILED DESCRIPTION OF THE INVENTION]

### [TECHNICAL PROBLEM]

In order to solve the above-described problems of the prior art, it is an object of the present invention to provide a structure of a battery module that prevents heat propagation between battery cells included in a battery module and heat propagation between battery modules included in a battery pack.

It is also an object of the present invention to provide a structure of a battery module that allows high-temperature gas and heat energy generated during an ignition of a battery cell to be quickly discharged in the desired direction.

It is also an object of the present invention to provide a structure of a battery module in which discharged high-temperature gas and heat energy do not flow back into the battery module.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

**In** order to solve above-described problems, the present invention provides a structure of a battery module including: a battery cell laminate including a plurality of pouch-type battery cells and a plurality of metal plate stacked in widthwise direction; a U frame having open upper end and open front and rear ends, and accommodating the battery cell laminate; a pair of end plates covering the front and rear ends of the U frame, respectively; and a top plate covering the upper end of the U frame, wherein the top plate may be provided with a plurality of venting holes, the plurality of metal plates may be provided with a plurality of lids corresponding to the plurality of venting holes, respectively, and the plurality of lids penetrate the top plate to protrude in upward direction, and may be bent toward one widthwise end to cover at least portions of the plurality of venting holes, respectively.

The battery cell laminate may include a plurality of unit cell laminates including a plurality of battery cells.

The metal plate may be disposed at other widthwise end of each of plurality of battery cells or each of the plurality of unit laminates. Here, the metal plate may be stacked directly on the other widthwise end surface of the battery cell, or may be stacked with an additional layer interposed therebetween. The laminate including one battery cell and one metal plate or one unit cell laminate and one metal plate may be a unit laminate constituting the battery cell laminate.

One venting hole or multiple venting holes may be provided above each of plurality of battery cells or each of the plurality of unit laminates. When multiple venting holes are provided above each of plurality of battery cells or each of the plurality of unit laminates, the multiple venting holes may be spaced apart and arranged in lengthwise direction. As a result, the top plate has a grill shape, thereby securing the necessary rigidity in lengthwise direction and widthwise direction.

The plurality of lids may correspond to the plurality of venting holes, respectively. That is, the locations of the plurality of lids may correspond to those of the plurality of venting holes, respectively, and the number of the plurality of lids may be equal to that of the plurality of venting holes.

The battery cell laminate may further include an insulation pad stacked with the plurality of pouch-type battery cells and the plurality of metal plates. The insulation pad may include an insulating material, and may be stacked together with the battery cell and the metal plate at any position as long as heat propagation between the battery cells or between the battery module and other neighboring battery modules may be prevented. For example, the insulation pad may be stacked at one widthwise end or other widthwise end of each of the plurality of metal plates, or may be interposed between two neighboring battery cells in the widthwise direction. Even when the plurality of battery cells form the unit cell laminate, the insulation pad may be interposed between each battery cell in the unit cell laminate and stacked together.

The insulation pad may include a compressible material. In such case, the insulation pad may prevent heat propagation and simultaneously absorb deformation caused by the metal plate and widthwise direction tolerance and swelling of the battery cell.

The battery module may further include a heat-resistant filler filling at least a portion of a space between the battery cell laminate and the end plate. Here, each of the plurality of battery cells may be provided with a first sealed portion at two lengthwise ends thereof, and the heat-resistant filler may cover the first sealed portion. Accordingly, when the battery cell ignites, gas and heat energy are prevented from being discharged in the lengthwise direction. The heat-resistant filler may include heat-resistant silicone. However, the material of the heat-resistant filler is not limited thereto, and any material may be used as long as the material has heat resistance and is capable of filling.

Each of the plurality of lids may be bent toward the one widthwise end, and a portion thereof may be welded to the top plate. By welding the lid to the top plate, structural stability between the battery cell laminate and the top plate may be improved.

The plurality of lids may include a first lid penetrating the top plate through a first venting hole and covering a second venting hole adjacent to the first venting hole in widthwise direction.

The plurality of lids may include a second lid penetrating the top plate through a slit provided in the top plate and covering a venting hole adjacent to the slit in widthwise direction. The slit may be provided adjacent to the other widthwise end of the top plate, and the lid protruding from the metal plate disposed at the outermost edge of the other widthwise end in the battery cell laminate may be the second lid.

The first lid may be in contact with the top plate at one widthwise end of the first venting hole, and the second lid may be in contact with the top plate at one widthwise end of the slit.

The thickness of the metal plate may be selected to an appropriate value such that the metal plate is bent when a bending moment exceeding a predetermined value is applied and is not deformed when a bending moment less than a predetermined value is applied. For example, each of the plurality of metal plates may have a thickness ranging from 1mm to 2mm. Preferably, each of the plurality of metal plates may have a thickness ranging from 1.4mm to 1.6mm.

Each of the plurality of battery cells may be provided with a second sealed portion at one heightwise end thereof, and the battery cell laminate may be disposed in a manner that the second sealed portion faces upward when accommodated in the U frame. Here, the second sealed portion may be provided along lengthwise direction of the battery cell.

When the battery cell ignites in the battery module according to the present invention, gas and heat energy may be discharged in upward direction. Due to the gas and heat energy discharged in the upward direction, the lid may be tilted outward to open the venting hole, and as a result, the gas and heat energy may be quickly discharged out of the battery module. Since the venting holes located above other battery cells that have not ignited are covered by the lids, the gas and heat energy are prevented from flowing back into the battery module.

### [ADVANTTAGEOUS EFFECTS]

The present invention may provide a structure of a battery module in which heat propagation caused by the conduction between battery cells is prevented by insulating and blocking battery cells and/or unit cell laminate.

According to the present invention, a structure of a battery module is provided wherein high-temperature gas and heat energy are guided to be discharged in upward direction, and simultaneously, are independently discharged for each battery cell and/or unit cell laminate when a battery cell ignites.

Another advantage of the battery module according to the present invention is that the inflow and re-inflow of high-temperature gas and heat energy discharged from other battery cells and/or unit cell laminates and other battery modules are prevented, and thus heat propagation between the battery cells and between battery modules are prevented.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate the structure of a pouch-type battery cell and venting occurring in the battery cell, respectively.
FIGS. 3 and 4 are an exploded perspective view and a perspective view, respectively, illustrating a structure of a general battery module.

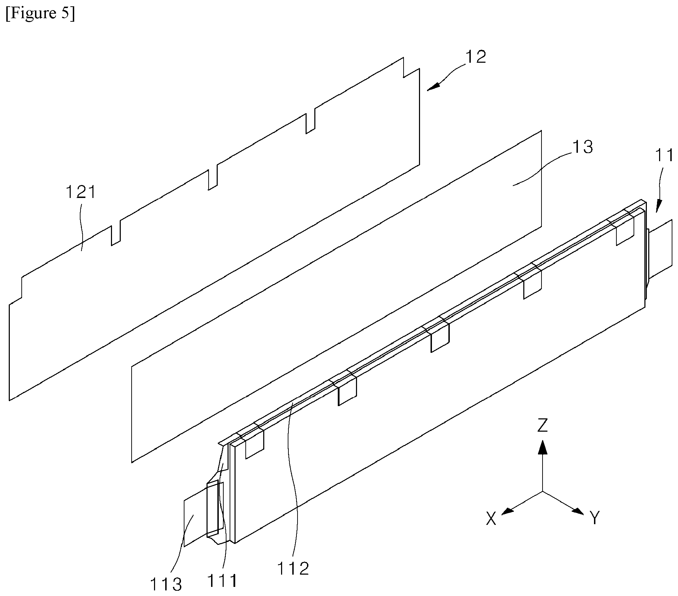

FIG. 5 illustrates a stacked structure of a unit cell laminate according to an embodiment of the present invention.
FIG. 6 illustrates a stacked structure of a battery cell, a metal plate and an insulation pad according to an embodiment of the present invention.
FIG. 7 illustrates a cross-section of the battery cell laminate of FIG. 6.
FIGS. 8 and 9 are an exploded perspective view and a perspective view illustrating a top plate, respectively, before the battery module is assembled according to an embodiment of the present invention.
FIG. 10 illustrates a cross-section of the battery module of FIG. 9 and an arrangement of a heat-resistant filler.
FIGS. 11 and 12 illustrate before and after the top plate is assembled to the battery module, respectively, according to an embodiment of the present invention.

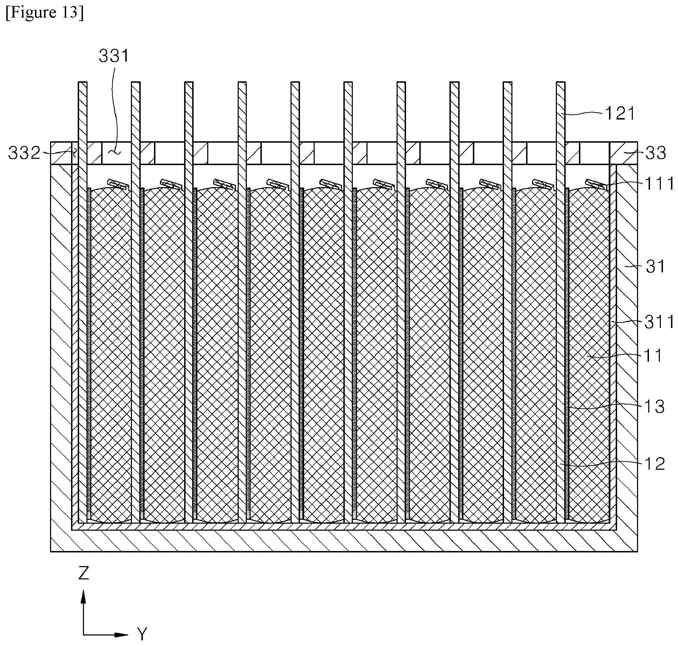

FIG. 13 illustrates a cross-section of the battery module of FIG. 12.
FIG. 14 illustrates a battery module according to an embodiment of the present invention.
FIG. 15 illustrates a cross-section of the battery module of FIG. 14.
FIG. 16 is a partial enlarged view of the main part of FIG. 15.
FIG. 17 illustrates venting occurring in a battery module according to an embodiment of the present invention.
FIG. 18 illustrates a battery pack with a battery module built-in according to an embodiment of the present invention.
FIG. 19 illustrates a vehicle with the battery pack of FIG. 18 built-in.

### [DESCRIPTION OF REFERENCE NUMERALS]

1: battery cell laminate
   11: battery cell
      111: first sealed portion
      112: second sealed portion
      113: electrode lead
   12: metal plate
      121: lid
      121a: first lid
      121b: second lid
   13: insulation pad
2: busbar frame
   21: slit
   22: bus bar
3: housing
   31: U frame
      311: insulating film
   32: end plate
   33: top plate
      331: venting hole
         331a: first venting hole
         331b: second venting hole
      332: slit
      333: welded portion
4: heat-resistant filler (silicone)
M: battery module
P: battery pack
V: vehicle
X: lengthwise direction
Y: widthwise direction
Z: heightwise direction

### [MODE FOR THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The battery module according to the present invention includes: a battery cell laminate including a plurality of pouch-type battery cells and a plurality of metal plate stacked in widthwise direction; a U frame having open upper end and open front and rear ends, and accommodating the battery cell laminate; a pair of end plates covering the front and rear ends of the U frame, respectively; and a top plate covering the upper end of the U frame, with improved venting path and capable of preventing heat propagation.

The technical solution of the present invention may be applied to battery modules and battery packs in which a plurality of battery cells having a thickness are stacked on top of each other in a single housing.

Hereinafter, a preferred embodiment of the present invention will be described with reference to the accompanying drawings.

FIGS. 1 and 2 illustrate the structure of a pouch-type battery cell and venting occurring in the battery cell, respectively. Referring to FIGS. 1 and 2, the battery cell 11 may be formed by accommodating an electrode assembly in a pouch and sealing the pouch made of sheet material.

The electrode assembly may be formed by alternately stacking a plurality of anodes and cathodes alternately with a separator interposed therebetween. An electrode lead 113 may extend from the electrode assembly and protrude out of the pouch.

The pouch may include metal material. The pouch may be coated with a synthetic resin layer for insulation on the inside and outside. The sheet may be folded in half to accommodate the electrode assembly and sealed by fusing the internal insulating layer to form the pouch. However, the pouch may have any material or structure different from the above, and may be sealed in any manner different from the above.

The pouch may be sealed in a first sealed portion 111 provided at two lengthwise ends thereof and a second sealed portion 112 provided at one heightwise end thereof. The electrode leads 113 may protrude out of the pouch through the first sealed portion 111. The second sealed portion 112 may be provided along the lengthwise direction of the battery cell 11. Tape may be attached to the second sealed portion 112 for re-sealing.

The battery cell 11 may ignite due to short circuit, shock, heating, etc. Here, a large amount of gas and heat energy may be discharged from the battery cell 11. Such gas and heat energy may be discharged through two lengthwise ends and one heightwise end of the battery cell 11 where the first sealed portion 111 and the second sealed portion 112 are provided, respectively.

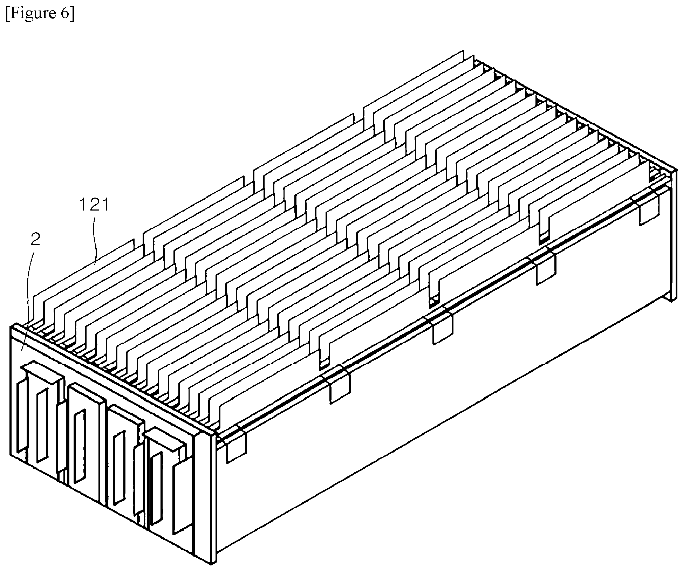

FIG. 6 illustrates a stacked structure of a battery cell, a metal plate and an insulation pad according to an embodiment of the present invention. Referring to FIG. 6, a metal plate 12 may be stacked on the other widthwise end of the battery cell 11. Here, the metal plate 12 may be stacked on the other widthwise end of the battery cell 11 with an additional layer interposed therebetween.

Alternatively, a plurality of stacked battery cells 11 may constitute a unit cell laminate, and the metal plate 12 may be stacked on the other widthwise end of the unit cell laminate. Here, the plurality of battery cells 11 and the metal plate 12 may also be stacked with additional layers interposed therebetween.

The metal plate 12 may include a lid 121 protruding upward from one heightwise end thereof. A plurality of lids 121 may be provided. The plurality of lids 121 may be arranged in lengthwise direction, and in particular, may be arranged to be spaced apart in lengthwise direction.

The battery cell 11 and the metal plate 12 may be stacked together with an insulation pad 13 made of an insulating material. The insulation pad 13 may be interposed between one battery cell 11 and another neighboring battery cell 11, or stacked at one widthwise end or the other widthwise end of the battery cells 11 or the metal plate 12. Since the metal plate 12 and the pouch of the battery cell 11 are made of metal material and have a high heat conduction rate, the heat propagation rate between the battery cells 11 may be lowered by providing the insulation pad 13.

The insulation pad 13 may include a compressible material. In such case, when deformation due to swelling occurs in the battery cell 11 or there is a tolerance in the stacked structure of the battery cells 11, the insulation pad 13 absorbs the swelling and the tolerance.

According to an embodiment of the present invention, the insulation pad 13 may be stacked on the other widthwise end surface of each battery cell 11. The plurality of metal plate 12 having a plurality of lids 121 arranged to be spaced apart from one another in lengthwise direction may be stacked on the other widthwise end surface of the insulation pad 13. That is, one unit laminate may be formed by sequentially stacking one insulation pad 13 and one metal plate 12 at the other widthwise end of each battery cell 11.

In one modified example, a plurality of battery cells may be stacked with the insulation pad interposed therebetween to form a unit cell laminate. One insulation pad may be laminated on the other widthwise end surface of each unit cell laminate. On the other widthwise end surface of the insulation pad, the metal plate with the lids arranged to be spaced apart in lengthwise direction may be stacked. That is, one unit laminate may be formed by sequentially stacking one insulation pad and one metal plate at the other widthwise end of each unit cell laminate.

Hereinafter, while each unit laminate including one battery cell 11 is exemplified according to the embodiment, it is apparent that the technical solution of the present invention may be applied to unit laminate including a plurality of battery cells 11.

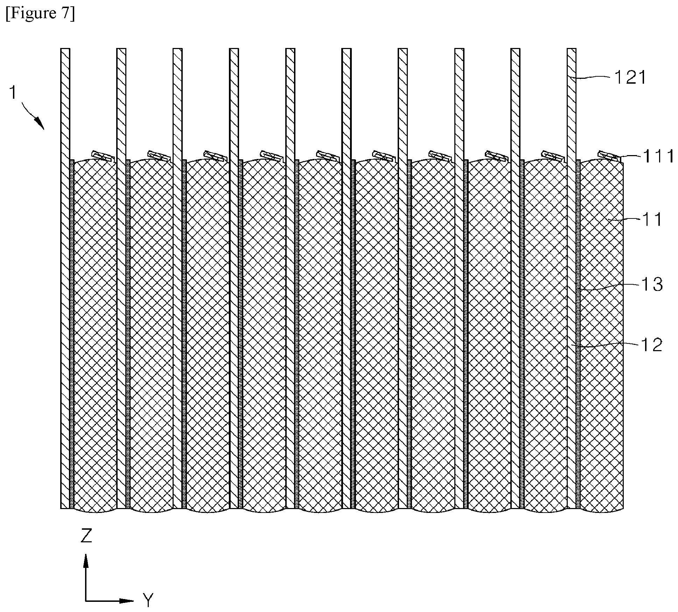

FIG. 6 illustrates a stacked structure of a battery cell, a metal plate and an insulation pad according to an embodiment of the present invention, and FIG. 7 illustrates a cross-section of the battery cell laminate of FIG. 6. Referring to FIGS. 6 and 7, a battery cell laminate 1 may be formed by stacking a plurality of battery cells 11, a plurality of metal plate 12, and/or a plurality of insulation pads 13 may be stacked in widthwise direction. The battery cell laminate 1 may be formed by repeatedly stacking a plurality of the unit laminates.

A pair of busbar frames 2 may be connected to the two lengthwise ends of the battery cell laminate 1.

The battery cell laminate 1 according to an embodiment of the present invention may be formed by repeatedly stacking the unit laminates wherein one battery cell 11, one insulation pad 13 and one metal plate 12 are sequentially stacked at the other widthwise ends, and a pair of the busbar frames 2 may be connected to the two lengthwise ends of the battery cell laminate 1.

In one modified example, the battery cell laminate 1 may include an additional insulation pad 13 laminated on the outermost side of one widthwise end and/or the other widthwise end.

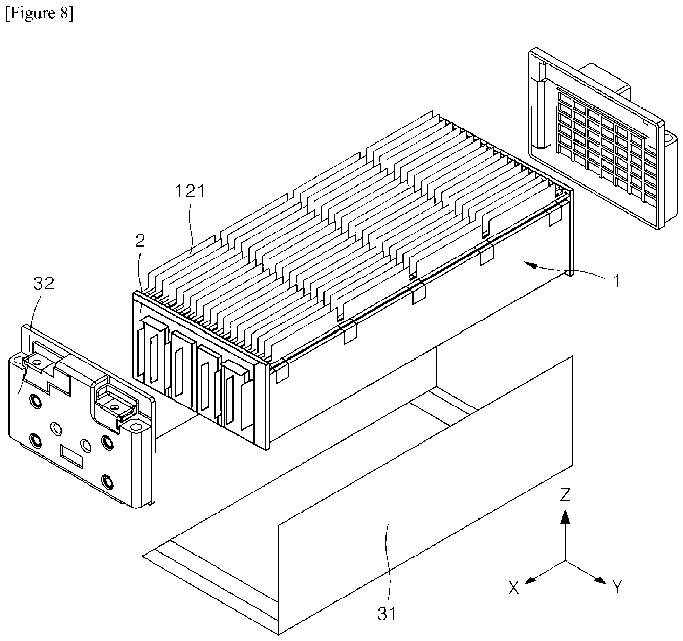

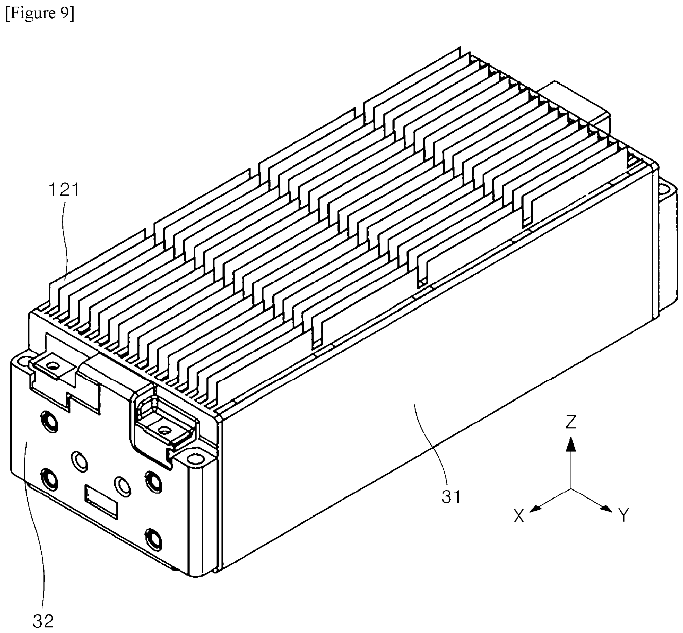

FIGS. 8 and 9 are an exploded perspective view and a perspective view illustrating a top plate, respectively, before the battery module is assembled according to an embodiment of the present invention. Referring to FIGS. 7 and 9, the battery cell laminate 1 may be accommodated in the housing 3 to form a battery module.

The battery cell laminate 1 may be accommodated in the housing 3 with the second sealed portion 112 facing upward. As the second sealed portion 112 faces upward, the main discharge direction of gas and heat energy discharged from the battery cell 11 may be directed upward. Here, the second sealed portion 112 may be positioned to be biased toward one widthwise side with respect to the widthwise center of the battery cell 11.

The housing 3 may include a U frame 31 having an open upper end and open front and rear ends, and a pair of end plates 32 covering the front and rear ends of the U frame 31, respectively.

The U frame and the end plate 32 may be bonded to each other to form the housing. Each of the U frame 31 and the end plate 32 may include metal material. Here, the U frame 31 and the end plate 32 may be welded to each other. However, the material and bonding method of the U frame 31 and the end plate 32 are not limited thereto, and may be made of a material other than metal material, and may be bonded to each other by a method other than welding.

The battery module according to an embodiment of the present invention includes the housing 3 including the U frame 31 and the pair of end plates 32, and the battery cell laminate 1 accommodated in the housing 3 with the second sealed portion 112 facing upward. Here, the direction in which the second sealed portion 112 faces and the direction in which the lid 121 protrudes may coincide with each other in upward direction.

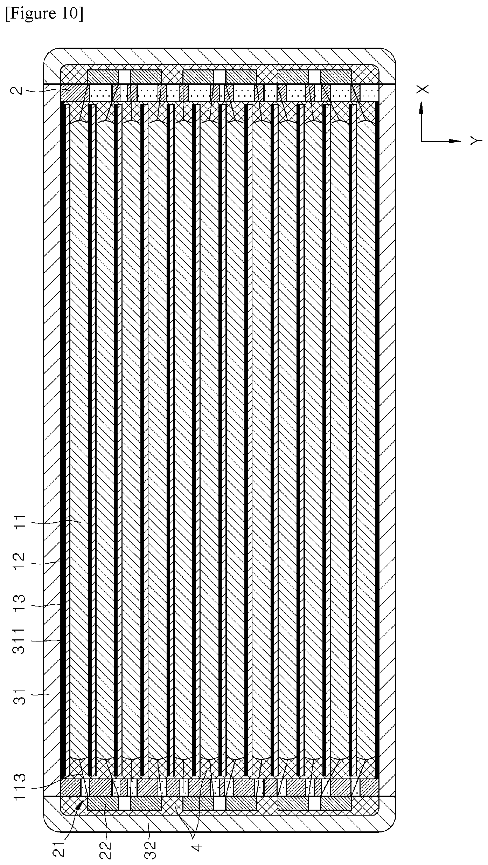

FIG. 10 illustrates a cross-section of the battery module of FIG. 9 and an arrangement of a heat-resistant filler. Referring to FIG. 10, the busbar frame 2 may include a slit 21 and a bus bar 22. The plurality of electrode leads 113 may pass through the slit 21 and be welded to the bus bar 22. The bus bar 22 may connect the plurality of electrode leads 113 to each other in series or parallel.

An empty space may be formed between the battery cell laminate 1 and the end plate. At least a portion of the empty space may be filled with a heat-resistant filler 4. That is, the heat-resistant filler 4 may fill at least a portion of the empty space between the battery cell laminate 1 and the busbar frame 2 and between the busbar frame 2 and the end plate..

The heat-resistant filler 4 may cover the first sealed portion 111 from which the electrode lead 113 protrudes. Accordingly, when the battery cell 11 ignites, discharge of gas and heat energy through the first sealed portion 111 may be prevented.

Here, preferably, when the battery cell 11 ignites, the discharge direction of gas and heat energy may be limited to heightwise direction, specifically upward direction. That is, in this case, the two widthwise ends and the heightwise end opposite to the second sealed portion of the pouch the battery cell 11are sealed, and two lengthwise direction ends of the battery cell 11 are sealed at the first sealed portion 111 covered with the heat-resistant filler 4 such that gas and heat energy may be discharged upward only through the second sealed portion 112 when the battery cell 11 ignites. Here, the gas discharge path (venting path) is provided independently for each battery cell 11 within the housing 3 such that each of the entirety of the battery cells 11 has own venting path that is not shared with other battery cells..

The heat-resistant filler 4 may include heat-resistant silicone. However, the heat-resistant filler 4 may include any material as long as heat-resistant performance is provided and the first sealed portion 111 is covered by filling the empty space.

According to an embodiment of the present invention, the heat-resistant filler 4 may include a heat-resistant silicone material, and may fill the space between the battery cell laminate 1 and the busbar frame 2 and the busbar frame 2 and the space between the busbar frame 2 and the end plate to completely cover the first sealed portion 111.

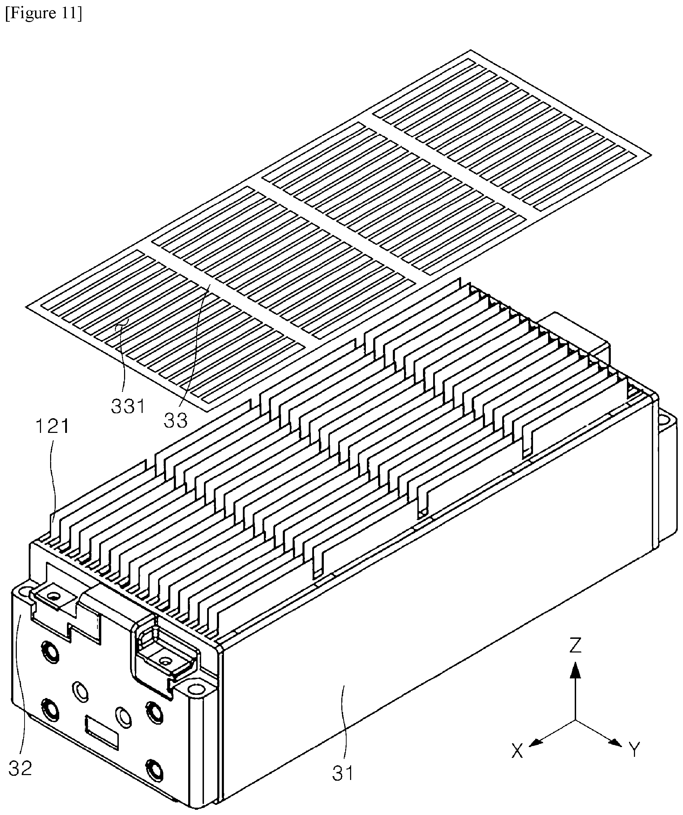

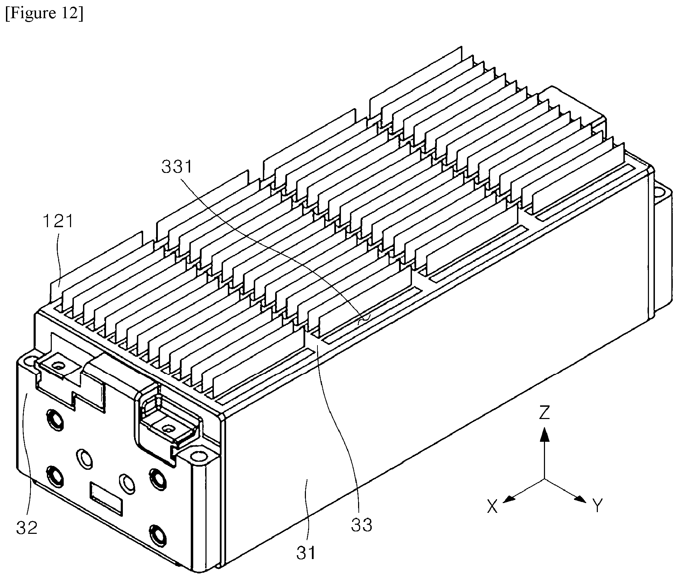

FIGS. 11 and 12 illustrate before and after the top plate is assembled to the battery module, respectively, according to an embodiment of the present invention. Referring to FIGS. 11 and 12, the housing 3 may include a top plate 33 covering the open upper end of the U frame 31. The top plate 33 may include a metal material. The top plate 33 may be welded to the U frame 31. However, the material of the top plate 33 and the bonding method with the U frame 31 are not limited thereto, and the top plate 33 may be made of a material other than metal material, and may be bonded to the U frame 31 by a method other than welding.

The top plate 33 may be provided with a venting hole 331 vertically penetrating the top plate 33. A plurality of venting holes 331 may be provided.

One venting hole 331 or a plurality of venting holes 331 may be provided above each battery cell 11. When a plurality of venting holes 331 are provided above each battery cell 11, the plurality of venting holes 331 may be arranged to be spaced apart from each other in the lengthwise direction. In such case, the top plate 33 may have a grill shape with the plurality of venting holes 331 therein. As a result, the top plate 33 may secure appropriate rigidity in both the widthwise direction and the lengthwise direction despite the plurality of venting holes 331.

Alternatively, one venting hole 331 or a plurality of venting holes 331 may be provided above each unit cell laminate. When a plurality of venting holes 331 are provided above each unit cell laminate, the plurality of venting holes 331 may be arranged to be spaced apart from each other in the lengthwise direction or in the widthwise direction. In such case, the top plate 33 may have a grill shape with the plurality of venting holes 331 therein. As a result, the top plate 33 may secure appropriate rigidity in both the widthwise direction and the lengthwise direction despite the plurality of venting holes 331.

Here, the locations of the venting hole 331 may correspond to those of the lids 121, respectively, and the number of the venting holes 331 may be equal to that of the lids 121. However, the number of the venting holes 331 may be greater than that of the lids 121 such that only one lid 121 may be provided for a plurality of the venting holes 331, or the number of the lids 121 may be greater than that of the venting holes 331 such that one venting hole 331 may be provided for a plurality of lids 121.

The lid 121 may penetrate the top plate 33 and protrude in upward direction. The top plate 33 may be provided with a slit 332 through which the lid 121 penetrates. The slit 332 may be provided through a separate perforation, or may be provided without being bonded to the bonding area of the top plate 33 and the U frame 31. The lid 121 may penetrate the top plate 33 through the venting hole 331, and may also penetrate the top plate 33 through the slit 332.

The battery module according to an embodiment of the present invention may include the top plate 33, and the top plate 33 may be made of a metal material and welded to the U frame 31. The top plate 33 may include venting holes 331 spaced apart from one another in the lengthwise direction at locations and the number thereof corresponding to those of the lids 121 above the battery cell 11, and slits 332 adjacent to the other widthwise end of the top plate 33 and spaced apart from one another in the lengthwise direction. Here, each lid 121 may penetrate the top plate 33 through one of the slit 332 and the venting hole 331 to protrude upward.

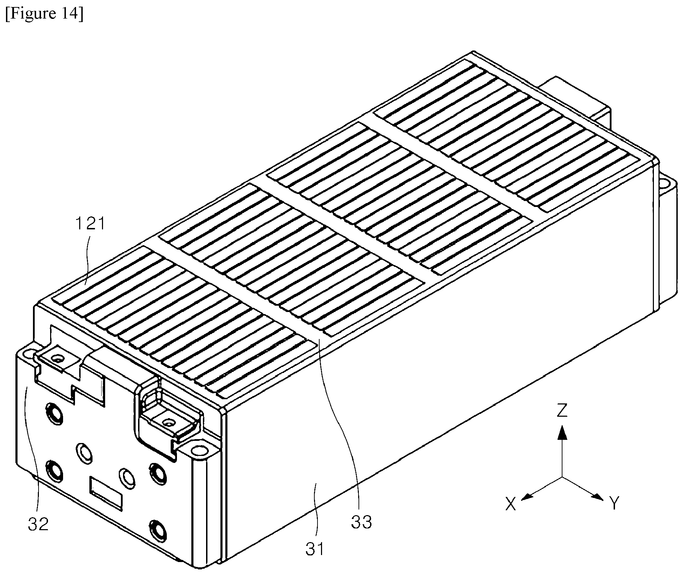

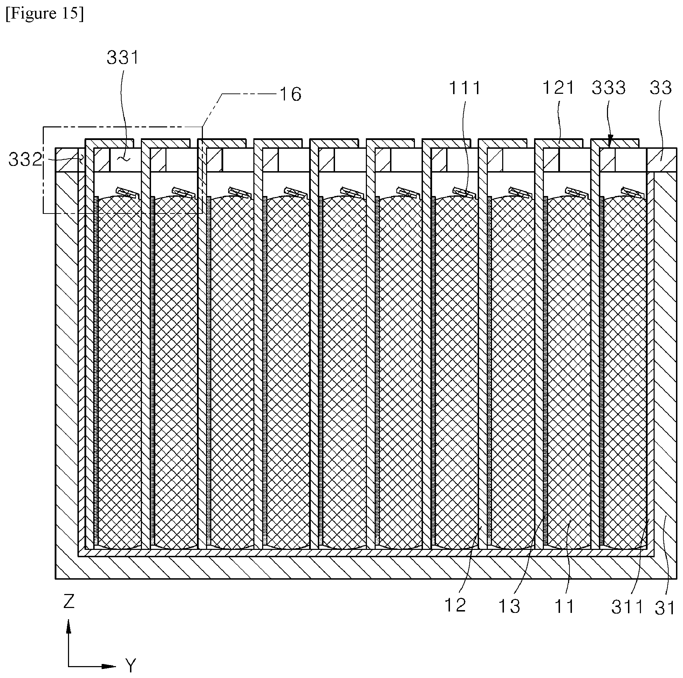

FIG. 14 illustrates a battery module according to an embodiment of the present invention, and FIG. 15 illustrates a cross-section of the battery module of FIG. 14. Referring to FIGS. 14 and 15, the lid 121 may protrude upward through the top plate 33 and then be bent toward one widthwise end.

The lid 121 is bent to cover at least a portion of the venting hole 331. Accordingly, all of the venting holes 331 may be covered by at least one of the lids 121. Here, it is not necessary that one venting hole 331 is covered by one lid 121. In addition, it is preferable that the venting hole 331 has a predetermined area not covered by the lid 121 and is open in upward direction. This is to prevent a rapid increase in internal pressure of the housing 3 by allowing a small amount of gas generated from the battery cell 11 to be discharged before full-scale thermal runaway or ignition begins.

According to an embodiment of the present invention, each lid 121 protrudes upward through the top plate 33 and is bent in the widthwise direction to cover a portion of the venting hole 331. Here, the venting hole 331 may not be covered by the lid 121 and may have a predetermined area open in upward direction.

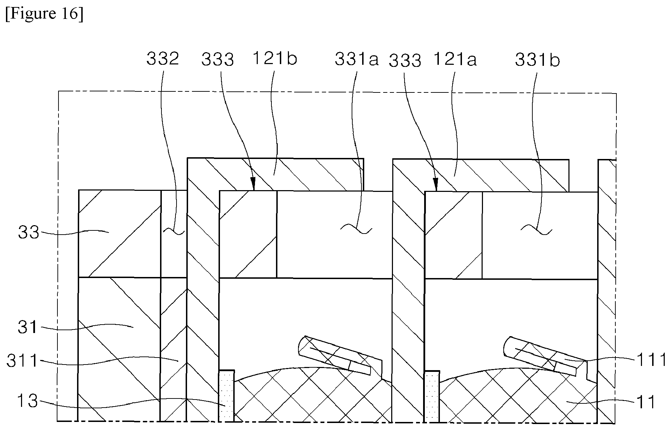

FIG. 16 is a partial enlarged view of the main part of FIG. 15.

The lid 121 may include a first lid 121a penetrating the top plate 33 through the venting hole 331. The first lid 121a may pass through a predetermined first venting hole 331a and cover a second venting hole 331b adjacent to the first venting hole 331a in the widthwise direction. Here, the first venting hole 331a may be determined differently for each first lid 121a, and accordingly, the second venting hole 331b may also be determined differently for each first lid 121a. For example, a certain venting hole may be the first venting hole for one first lid and may be the second venting hole for another first lid.

Here, the first lid 121a may be in contact with the top plate 33 at one widthwise end of the first venting hole. That is, the first lid 121a may be bent toward the one widthwise end of the battery module while having the one widthwise end of the first venting hole 331a through which the first lid 121a passes. When a roller is used to bend the first lid 121a, the one widthwise end of the first venting hole 331a may exert a reaction force corresponding to the force applied to the first lid 121a by the roller toward the one widthwise side such that the first lid 121a may be bent toward the one widthwise end of the battery module. Here, it is preferable for structural stability that the first lid 121a is simultaneously in contact with the inner side surface of the first venting hole 331a adjacent to the one widthwise end of the first venting hole 331a and the upper surface of the top plate 33.

The lid may include a second lid 121b penetrating the top plate 33 through the slit 332. The second lid 121b may pass through the slit 332 and cover the venting hole 331 adjacent to the slit 332 in widthwise direction.

Here, the second lid 121b may be in contact with the top plate 33 at one widthwise end of the slit. That is, the second lid 121b may be bent toward the one widthwise end of the battery module while having the one widthwise end of the slit 332 through which the second lid 121b passes. When a roller is used to bend the second lid 121b, the one widthwise end of the slit 332 may exert a reaction force corresponding to the force applied to the second lid 121b by the roller toward the one widthwise side such that the second lid 121b may be bent toward the one widthwise end of the battery module. Here, it is preferable for structural stability that the second lid 121b is simultaneously in contact with the inner side surface of the slit 332 adjacent to the one widthwise end of the slit 332 and the upper surface of the top plate 33.

After the lid 121 is bent, a portion thereof may be bonded to the top plate 33. For example, a portion of the lid 121 adjacent to the front end and/or proximal end from the bent part may be welded to the inner side surface of the venting hole 331 or the slit 332 through which the lid 121 penetrates and/or to the upper surface of the top plate 33. The bonding may be achieved by welding. By bonding the lid 121 to the top plate 33, the stability of the arrangement relationship between the lid 121 and the top plate 33 may be improved.

According to an embodiment of the present invention, the lids 121 may include the second lid 121b protruding from the metal plate 12 provided at the outermost end of the other widthwise end and penetrates the top plate 33 through the slit 332 in upward direction, and the first lid 121a other than the second lid 121b penetrating the top plate 33 through the venting holes 331. Here, the first lid 121a and the second lid 121b are in contact with one widthwise end of the venting hole 331 and the slit 332, respectively, and portions thereof may be welded to the top plate 33.

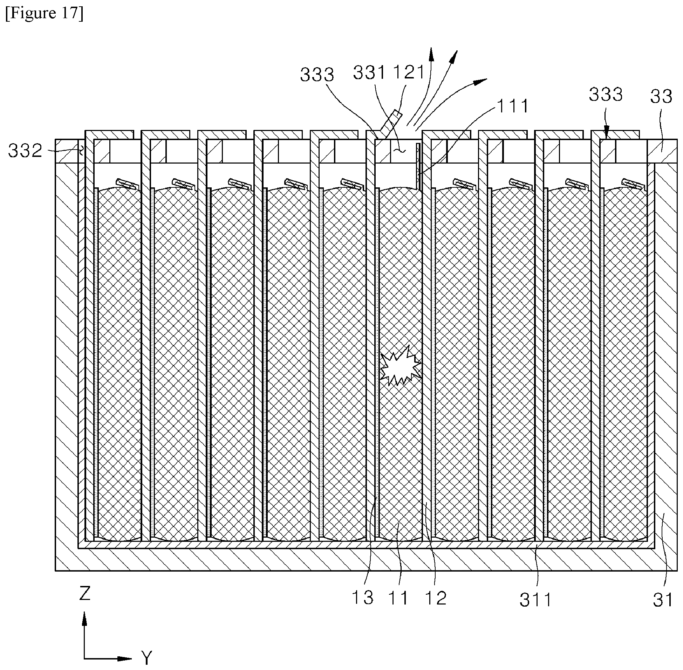

FIG. 17 illustrates venting occurring in a battery module according to an embodiment of the present invention. Referring to FIG. 17, when one of the battery cells 11 ignites, a large amount of gas and heat energy may be discharged from the ignited battery cell 11 in upward direction. Here, the gas and heat energy may be discharged through the second sealed portion 112 located the upper portion of the battery cell 11 along the long widthwise side of the battery cell 11.

Here, independent venting space surrounded by the metal plate 12 and the heat-resistant filler may be provided for each battery cell 11 or each unit cell laminate.

The lid 121 is bent outward as the internal pressure of the venting space increases due to the gas and heat energy, thereby opening the venting hole 331 in upward direction. Here, a portion of the lid 121 is welded to the top plate 33 such that only the lid 121 may be opened without the metal plate 12 moving or falling off. As the lid 121 opens, high-temperature gas and heat energy in the housing 3 may be discharged to the outside, preventing further increase in the temperature of the battery cell 11 and delaying the progress of ignition.

Here, the venting holes provided above the battery cells other than the ignited battery cell 11 may still be covered by the lid. Accordingly, gas and heat energy discharged from the ignited battery cell 11 through the venting hole 331 may be prevented from flowing back into the housing to heat other battery cells. In addition, the battery cells 11 may have an insulation pad 13 interposed therebetween, and thus, heat propagation caused by heat conduction between the battery cells 11 may also be prevented.

When the metal plate 12 is too thin, the lid 121 may be easily damaged and may not be able to sufficiently prevent the inflow of gas. When the metal plate 12 is too thick, bending and welding are difficult, and the venting space may not be opened despite an increase in internal pressure due to ignition. Accordingly, the metal plate 12 may preferably have an appropriate thickness so as to have a bending rigidity that facilitates bending when subjected to a force exceeding a predetermined level while preventing deformation when subjected to a force below a predetermined level. For example, the metal plate 12 may have a thickness ranging from 1 mm to 2 mm. Preferably, the metal plate 12 may have a thickness ranging from 1.4 mm to 1.6 mm. When the metal plate 12 has an appropriate thickness as described above, both the functions of preventing the discharge and the inflow of gas and heat energy may be exerted.

**In** the battery module according to an embodiment of the present invention, each of the battery cells 11 has independent venting space insulated from each other by the insulation pad 13. When one of the battery cells 11 ignites, the lid 121 above the ignited battery cell 11 opens the venting hole 331 to discharge high-temperature gas and heat energy from the venting space to the outside of the housing 3, and the lids provided at venting holes above the non-ignited battery cells prevents the discharged gas and heat energy flowing back into other venting spaces. The insulation pad 13 may prevent heat propagation caused by the conduction between the battery cells 11. As a result, in the structure of a battery module according to the embodiment, heat discharge is rapid and selective, heat inflow is prevented, and serial ignition and thermal runaway due to heat propagation are prevented.

The present invention also provides a battery pack with the battery module built therein and a vehicle with the battery pack therein.

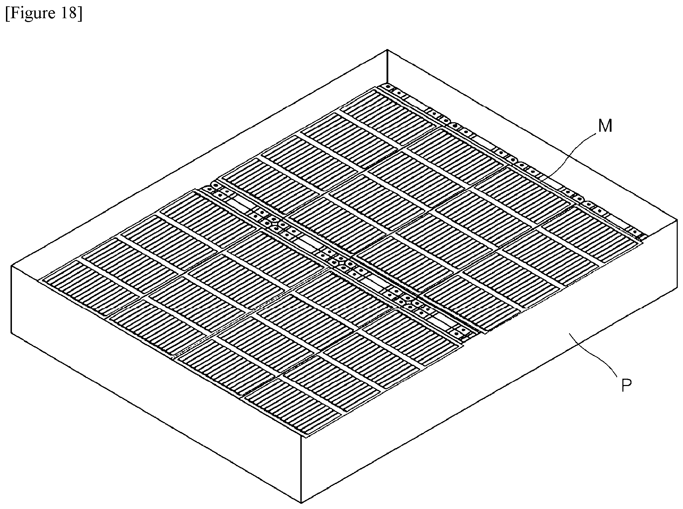

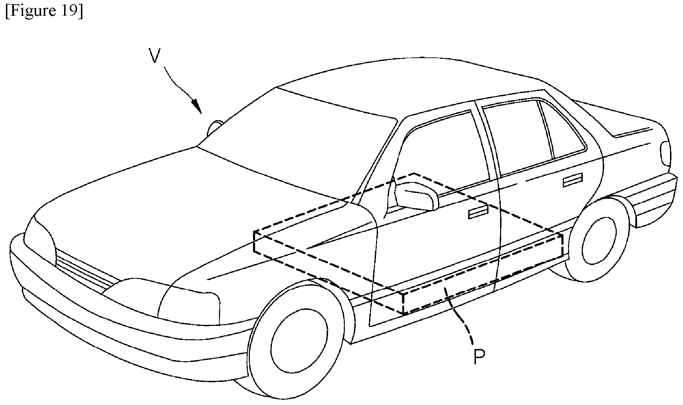

FIGS. 18 and 19 illustrate a battery pack with a battery module built therein, and a vehicle with the battery pack built therein according to an embodiment of the present invention. Referring to FIGS. 18 and 19, a plurality of battery modules M may be built into a single pack frame to form a battery pack P for high voltage and/or high capacity. The plurality of battery modules M are connected in parallel or in series to one another by pack bus bars included in the battery pack P to achieve high voltage and capacity as a whole. The battery pack P may be built into an electric vehicle V that uses secondary batteries as a power source. The battery pack P may provide power to the vehicle V through a motor built into the vehicle V. Since the detailed structures of such battery packs and vehicles are known to those skilled in the art, detailed descriptions thereof are not given herein.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a battery cell laminate comprising a plurality of pouch-type battery cells and a plurality of metal plate stacked in widthwise direction;
a U frame having open upper end and open front and rear ends, and accommodating the battery cell laminate;
a pair of end plates covering the front and rear ends of the U frame, respectively; and
a top plate covering the upper end of the U frame,
wherein the top plate is provided with a plurality of venting holes,
the plurality of metal plates are provided with a plurality of lids corresponding to the plurality of venting holes, respectively, and
the plurality of lids penetrate the top plate to protrude in upward direction, and are bent toward one widthwise end to cover at least portions of the plurality of venting holes, respectively.

2. The battery module of claim 1, wherein the plurality of metal plates are disposed at other widthwise ends of the plurality of pouch-type battery cells, respectively, and
one venting hole is provided above each of the plurality of pouch-type battery cells.

3. The battery module of claim 1, wherein the plurality of metal plates are disposed at other widthwise ends of the plurality of pouch-type battery cells, respectively, and
multiple venting holes are provided above each of the plurality of pouch-type battery cells.

4. The battery module of claim 3, wherein multiple venting holes spaced apart from each otherand arranged in lengthwise direction are provided above each of the plurality of pouch-type battery cells.

5. The battery module of claim 1, wherein the battery cell laminate includes a plurality of unit cell laminates comprising a plurality of battery cells,
the plurality of metal plates are disposed at other widthwise ends of the plurality of unit laminates, respectively, and
one venting hole is provided above each of the plurality of cell laminates.

6. The battery module of claim 1, wherein the battery cell laminate includes a plurality of unit cell laminates comprising a plurality of battery cells,
the plurality of metal plates are disposed at other widthwise ends of the plurality of unit laminates, respectively, and
multiple venting holes are provided above each of the plurality of unit laminates.

7. The battery module of claim 6, wherein multiple venting holes spaced apart from each otherand arranged in lengthwise direction are provided above each of the plurality of unit laminates.

8. The battery module of claim 6, wherein multiple venting holes spaced apart from each otherand arranged in widthwise direction are provided above each of the plurality of unit laminates.

9. The battery module of claim 1, the battery cell laminate further comprises an insulation pad stacked with the plurality of pouch-type battery cells and the plurality of metal plates.

10. The battery module of claim 9, wherein the insulation pad is stacked at one widthwise end or other widthwise end of each of the plurality of metal plates.

11. The battery module of claim 9, wherein the insulation pad is interposed between two neighboring battery cells in the widthwise direction.

12. The battery module of claim 9, wherein the insulation pad comprises a compressible material.

13. The battery module of claim 1, further comprising a heat-resistant filler filling at least a portion of a space between the battery cell laminate and the end plate.

14. The battery module of claim 13, wherein each of the plurality of battery cells is provided with a first sealed portion at two lengthwise ends thereof, and
the heat-resistant filler covers the first sealed portion.

15. The battery module of claim 13, wherein the heat-resistant filler comprises a heat-resistant silicone.

16. The battery module of claim 1, wherein each of the plurality of lids is bent toward the one widthwise end, and a portion thereof is welded to the top plate.

17. The battery module of claim 1, wherein the plurality of lids comprise a first lid penetrating the top plate through a first venting hole and covering a second venting hole adjacent to the first venting hole in widthwise direction.

18. The battery module of claim 17, wherein the first lid is in contact with the top plate at one widthwise end of the first venting hole.

19. The battery module of claim 1, wherein the plurality of lids comprise a second lid penetrating the top plate through a slit provided in the top plate and covering a venting hole adjacent to the slit in widthwise direction.

20. The battery module of claim 19, wherein the second lid is in contact with the top plate at one widthwise end of the slit.

21. The battery module of claim 1, wherein each of the plurality of metal plates may have a thickness ranging from 1mm to 2mm.

22. The battery module of claim 21, wherein each of the plurality of metal plates may have a thickness ranging from 1.4mm to 1.6mm.

23. The battery module of claim 1, wherein each of the plurality of battery cells is provided with a second sealed portion at one heightwise end thereof, and
the battery cell laminate is disposed in a manner that the second sealed portion faces upward.

24. The battery module of claim 23, wherein the second sealed portion is provided along lengthwise direction of the battery cell.

25. A battery pack including a battery module of any one of claims 1 to 24.

26. A vehicle including a battery pack of claim 25.
